# EUROPÄISCHE PATENTSCHRIFT

(11) **EP 4 245 930 B1**
(45) Veröffentlichungstag und Bekanntmachung des Hinweises auf die Patenterteilung: **06.05.2026**
(21) Anmeldenummer: 23159488.8
(22) Anmeldetag: 01.03.2023
(51) Int. Cl.: E03C 1/04

(54) **SANITÄRARMATUR MIT EINEM SCHLAUCH**
SANITARY FITTING WITH A HOSE
ROBINETTERIE SANITAIRE DOTÉE D'UN TUYAU FLEXIBLE

(30) Priorität: 18.03.2022 DE 102022106361
(43) Veröffentlichungstag der Anmeldung: 20.09.2023
(73) Patentinhaber: Grohe AG, 58675 Hemer (DE)
(72) Erfinder: WOESTHOFF, Wulf, 58675 Hemer (DE); SCHLUETER, Matthias, 44289 Dortmund (DE); KUTSCH, Christian, 44135 Dortmund (DE)

(56) Entgegenhaltungen:
- DE-A1- 10 317 753
- DE-A1- 102004 054 869
- DE-A1- 102007 048 889
- DE-A1- 102018 007 226
- FR-A1- 2 398 247

## Beschreibung

Die vorliegende Erfindung betrifft eine Sanitärarmatur, die insbesondere im Zusammenhang mit Spülbecken und/oder Waschbecken, verwendbar ist.

Sanitärarmaturen dienen an Spülbecken, Waschbecken, Badewannen und/oder Duschen der bedarfsgerechten Bereitstellung einer Flüssigkeit, insbesondere Wasser. Hierzu können Sanitärarmaturen ein Gehäuse mit einem Auslauf und einer Auslauföffnung für die Flüssigkeit aufweisen. Das Gehäuse der Sanitärarmatur ist an einem Träger, beispielsweise einer Arbeitsplatte oder einem Spül- bzw. Waschbecken, befestigbar. Ferner können Sanitärarmaturen ein Mischventil oder eine Mischkartusche aufweisen, durch die Kaltwasser und Warmwasser zu Mischwasser mit einer gewünschten Mischwassertemperatur mischbar sind. Bekannt sind zudem Sanitärarmaturen, mit denen verschiedene Flüssigkeiten, zum Beispiel das Mischwasser, karbonisierte Flüssigkeit, aromatisierte Flüssigkeit, gefilterte Flüssigkeit, gekühlte Flüssigkeit und/oder Heißwasser zapfbar sind. Um die verschiedenen Flüssigkeiten von ihren jeweiligen Flüssigkeitsquellen zu der Auslauföffnung zu leiten sind mehrere Flüssigkeitsleitungen erforderlich, die sich parallel zueinander durch das Armaturengehäuse und/oder den Auslauf erstrecken. Hieraus folgt ein hoher Platzbedarf für die Flüssigkeitsleitungen, der eine Gestaltungsfreiheit der Armaturengehäuse bzw. Ausläufe einschränkt.

Es sind auch Sanitärarmaturen mit einem Schlauch bekannt, wobei in dem Schlauch mindestens drei parallel zueinander und getrennt voneinander verlaufende Fluidkanäle gebildet sind, beispielsweise aus DE 10 2018 007 226 A1.

Aufgabe der Erfindung ist es daher, die mit Bezug auf den Stand der Technik geschilderten Probleme zumindest teilweise zu lösen und insbesondere eine Sanitärarmatur anzugeben, durch die verschiedene bzw. mehrere Flüssigkeiten mit geringerem Platzbedarf zu der Auslauföffnung leitbar sind.

Diese Aufgabe wird gelöst mit einer Sanitärarmatur gemäß den Merkmalen des unabhängigen Patentanspruchs. Weitere vorteilhafte Ausgestaltungen der Sanitärarmatur sind in den abhängigen Patentansprüchen angegeben. Es ist darauf hinzuweisen, dass die in den abhängigen Patentansprüchen einzeln aufgeführten Merkmale in beliebiger technologisch sinnvoller Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierzu trägt eine Sanitärarmatur bei, die zumindest die folgenden Komponenten aufweist:
- ein Armaturengehäuse mit einem Auslauf und einer Auslauföffnung; und
- einen Schlauch aus Silikon mit einem ersten Lumen zum Führen einer ersten Flüssigkeit von einer ersten Flüssigkeitsquelle zu der Auslauföffnung, einem zweiten Lumen zum Führen einer zweiten Flüssigkeit von einer zweiten Flüssigkeitsquelle zu der Auslauföffnung und einem dritten Lumen zum Führen einer dritten Flüssigkeit von einer dritten Flüssigkeitsquelle zu der Auslauföffnung, wobei der Schlauch zumindest teilweise eine Ummantelung aufweist.

Die Sanitärarmatur dient insbesondere der bedarfsgerechten Bereitstellung von Flüssigkeiten, wie insbesondere Wasser, an Spülbecken und/oder Waschbecken. Die Sanitärarmatur umfasst ein Armaturengehäuse, das insbesondere zumindest teilweise aus Kunststoff und/oder (Guss-)Metall, wie zum Beispiel Messing, bestehen kann. Das Armaturengehäuse ist an einem Träger, beispielsweise einer Arbeitsplatte, dem Spülbecken oder Waschbecken, befestigbar und/oder weist einen (hervorstehenden bzw. abzweigenden) Auslauf auf, der starr oder bewegbar mit dem Armaturengehäuse verbunden ist. Der Auslauf kann zumindest teilweise rohrförmig ausgebildet sein und/oder weist eine Auslauföffnung auf. Die Auslauföffnung kann beispielsweise nach Art eines Strahlbildners oder Mousseurs ausgebildet sein.

Die Sanitärarmatur weist einen Schlauch aus Silikon auf. Der Schlauch kann zumindest teilweise durch das Armaturengehäuse und/oder den Auslauf verlaufen. Der Schlauch weist insbesondere einen runden Querschnitt auf. Bei dem Silikon handelt es sich um ein für Trinkwasser zugelassenes und/oder geeignetes Material. Das Silikon kann insbesondere mindestens eine, mehrere oder sogar jede der folgenden Eigenschaften aufweisen:
- temperaturbeständig bei -40 °C bis 200 °C [Celsius] sein;
- transluzent sein;
- eine Dichte von 1,22 g/cm³ [Gramm pro Kubikzentimeter] bis 1,26 g/cm³, bevorzugt (circa) 1,24 g/cm³, aufweisen;
- eine Reißfestigkeit von 8,6 N/mm² [Newton pro Quadratmillimeter] bis 8,8 N/mm², bevorzugt (circa) 8,7 N/mm², aufweisen;
- eine Reißdehnung von 390 % bis 410 %, bevorzugt (circa) 400 %, aufweisen;
- eine Weiterreißfestigkeit von 30 N/mm [Newton pro Millimeter] bis 34 N/mm, bevorzugt (circa) 32 N/mm, aufweisen.

Der Schlauch weist ein erstes Lumen zum Führen einer ersten Flüssigkeit von einer ersten Flüssigkeitsquelle zu der Auslauföffnung, ein zweites Lumen zum Führen einer zweiten Flüssigkeit von einer zweiten Flüssigkeitsquelle zu der Auslauföffnung und ein drittes Lumen zum Führen einer dritten Flüssigkeit von einer dritten Flüssigkeitsquelle zu der Auslauföffnung auf. Darüber hinaus kann der Schlauch in einer nicht erfindungsgemäßen Ausführung ein weiteres Lumen zum Führen zumindest einer weiteren Flüssigkeit von zumindest einer weiteren Flüssigkeitsquelle aufweisen. Bei den Lumen handelt es sich insbesondere jeweils um einen (röhrenförmigen) Flüssigkeitskanal, der sich von einem ersten längsseitigen Ende des Schlauchs bis zu einem zweiten längsseitigen Ende des Schlauchs durch den Schlauch erstreckt. Das erste längsseitige Ende des Schlauchs kann mit der einen ersten Flüssigkeitsquelle, zweiten Flüssigkeitsquelle und dritten Flüssigkeitsquelle (und ggf. der zumindest einen weiteren Flüssigkeitsquelle) verbunden sein. Alternativ kann das erste längsseitige Ende des Schlauchs mit einer Verteilervorrichtung für die zumindest eine erste Flüssigkeitsquelle, zweite Flüssigkeitsquelle und dritte Flüssigkeitsquelle (und ggf. für die zumindest eine weitere Flüssigkeitsquelle) verbunden sein. Die Verteilervorrichtung kann mit der ersten Flüssigkeitsquelle, zweiten Flüssigkeitsquelle und dritten Flüssigkeitsquelle (und ggf. weiteren Flüssigkeitsquellen) verbunden sein. Das zweite längsseitige Ende des Schlauchs kann mit der Auslauföffnung verbunden sein. Die Verteilervorrichtung kann außerhalb des Armaturengehäuses und/oder des Auslaufs angeordnet sein. Die einzelnen Lumen verlaufen parallel zueinander durch den Schlauch und werden durch das Silikon begrenzt. Die Lumen sind durch das Silikon einstückig ausgebildet. Die Lumen verlaufen insbesondere nicht konzentrisch zueinander. Der Schlauch ist nach Art eines Mehrlumenschlauchs bzw. Multilumenschlauchs ausgebildet.

Bei der ersten Flüssigkeit kann es sich beispielsweise um Mischwasser und/oder bei der ersten Flüssigkeitsquelle beispielsweise um ein Mischventil oder eine Mischkartusche handeln. Durch das Mischventil bzw. die Mischkartusche sind insbesondere Kaltwasser mit einer Kaltwassertemperatur und Warmwasser mit einer Warmwassertemperatur zu dem Mischwasser mit einer gewünschten Mischwassertemperatur mischbar. Die Kaltwassertemperatur beträgt insbesondere maximal 25 °C, bevorzugt 1 °C bis 25 °C, besonders bevorzugt 5 °C bis 20 °C und/oder die Warmwassertemperatur insbesondere maximal 90 °C, bevorzugt 25 °C bis 90 °C, besonders bevorzugt 55 °C bis 65 °C. Das Mischventil oder die Mischkartusche können in dem Armaturengehäuse der Sanitärarmatur angeordnet sein. Bei der zweiten Flüssigkeit, der dritten Flüssigkeit und/oder der zumindest einen weiteren Flüssigkeit kann es sich zum Beispiel um Trinkwasser, Mischwasser, Kaltwasser, Warmwasser, karbonisierte Flüssigkeit, aromatisierte Flüssigkeit, gefilterte Flüssigkeit, gekühlte Flüssigkeit (beispielsweise mit einer Kühlwassertemperatur von 1 °C bis 10 °C) und/oder Heißwasser (beispielsweise mit einer Heißwassertemperatur von 90 °C bis 100 °C) handeln.

Der Schlauch weist zumindest teilweise eine Ummantelung auf. Vorzugsweise weist der Schlauch von seinem ersten längsseitigen Ende bis zu seinem zweiten längsseitigen Ende eine Ummantelung auf. Die Ummantelung ummantelt den Schlauch insbesondere vollständig bzw. um 360°. Durch die Ummantelung ist der Schlauch insbesondere gegen Beschädigungen, äußere Einflüsse, Knicken und/oder Platzen (beispielsweise infolge eines zu hohen Flüssigkeitsdrucks in den Lumen) schützbar. Die Ummantelung ist insbesondere flexibel ausgebildet, sodass der Schlauch mit der Ummantelung flexibel ist.

Durch den Schlauch sind drei Flüssigkeiten getrennt voneinander durch einen einzigen Schlauch der Auslauföffnung zuführbar, wodurch sich der Platzbedarf in dem Armaturengehäuse bzw. dem Auslauf reduziert.

Das Silikon kann eine Härte von 70 bis 85 Shore A aufweisen. Die Härte des Silikons kann bevorzugt 73 bis 83 Shore A, besonders bevorzugt (circa) 78 Shore A, aufweisen.

Die Ummantelung kann an einer Außenfläche des Schlauchs ausgebildet sein. Die Ummantelung kann an der Außenfläche des Schlauchs insbesondere derart ausgebildet sein, dass die Ummantelung relativ zu dem Schlauch (im Wesentlichen) nicht verrutschen kann und/oder zwischen der Ummantelung und dem Schlauch kein Spalt besteht. Der Schlauch kann ohne die Ummantelung einen ersten Außendurchmesser von beispielsweise 10 mm bis 15 mm, bevorzugt 12,5 mm bis 13,5 mm, aufweisen. Der Schlauch kann mit der Ummantelung einen zweiten Außendurchmesser von beispielsweise 12 mm bis 18 mm, bevorzugt 14 mm bis 15 mm, aufweisen.

Auf den Schlauch wirkende Zugkräfte können zumindest teilweise durch die Ummantelung aufnehmbar sein. Hierdurch ist das Silikon des Schlauchs entlastbar bzw. gegen Beschädigungen schützbar.

Bei der Ummantelung kann es sich um ein Geflecht aus Draht oder zumindest einem Filament handeln. Somit kann die Ummantelung nach Art eines "Braidings" ausgebildet sein. Beispielsweise kann die Ummantelung 3 bis 8 Drähte und/oder Filamente, bevorzugt 5 Drähte und/oder Filamente, umfassen. Das zumindest eine Filament kann zumindest teilweise aus, insbesondere thermoplastischen, Kunststoff bestehen.

Der Draht kann Edelstahl umfassen.

Das zumindest eine Filament kann Polyethylenterephthalat (PET) umfassen.

Ein erster Querschnitt des ersten Lumens ist in erfindungsgemäßer Weise halbkreisförmig ausgebildet. Der erste Querschnitt ist orthogonal zu einer Längsachse des Schlauchs ausgerichtet.

Ein zweiter Querschnitt des zweiten Lumens und ein dritter Querschnitt des dritten Lumens sind in erfindungsgemäßer Weise viertelkreisförmig ausgebildet.

Der zweite Querschnitt des zweiten Lumens und der dritte Querschnitt des dritten Lumens sind in erfindungsgemäßer Weise viertelkreisförmig ausgebildet. Der zweite Querschnitt und/oder der dritte Querschnitt sind orthogonal zu der Längsachse des Schlauchs ausgerichtet.

Das erste Lumen ist von dem zweiten Lumen, dem dritten Lumen und/oder dem zumindest einen weiteren Lumen insbesondere durch eine erste Trennwand getrennt. Das zweite Lumen, dritte Lumen und/oder das zumindest eine weitere Lumen sind insbesondere durch zumindest eine zweite Trennwand voneinander getrennt. Die erste Trennwand weist insbesondere eine erste Dicke von beispielsweise 1 mm bis 1,5 mm und/oder die zweite Trennwand insbesondere eine zweite Dicke von beispielsweise 1 mm bis 1,5 mm auf.

Das erste Lumen, zweite Lumen, dritte Lumen und/oder das zumindest eine weitere Lumen können jeweils eine in Richtung der Außenfläche des Schlauchs orientierte Innenwand mit einem Lumenradius aufweisen. Der Lumenradius kann beispielsweise 4 mm bis 8 mm, bevorzugt 5 mm bis 6 mm, besonders bevorzugt (circa) 5,5 mm, betragen.

Erste Ecken eines ersten Querschnitts des ersten Lumens, zweite Ecken eines zweiten Querschnitts des zweiten Lumens und/oder dritte Ecken eines dritten Querschnitts des dritten Lumens können einen Radius von 0,4 mm bis 0,6 mm aufweisen. Vorzugsweise kann der Radius (circa) 0,5 mm betragen. Hierdurch lässt sich ein Strömungswiderstand der Flüssigkeit in den Lumen reduzieren, ohne dass eine Lumenquerschnittsfläche der einzelnen Lumen zu stark reduziert wird.

Die Erfindung sowie das technische Umfeld werden nachfolgend anhand der Figuren näher erläutert. Es ist darauf hinzuweisen, dass die Figuren eine besonders bevorzugte Ausführungsvariante der Erfindung zeigen, diese jedoch nicht darauf beschränkt ist. Dabei sind gleiche Bauteile in den Figuren mit denselben Bezugszeichen versehen. Es zeigen beispielhaft und schematisch:
- Fig. 1:: eine Sanitärarmatur in einer Seitenansicht;
- Fig. 2:: ein Schlauch der Sanitärarmatur in einem Querschnitt;
- Fig. 3:: der Schlauch in einer perspektivischen Darstellung.

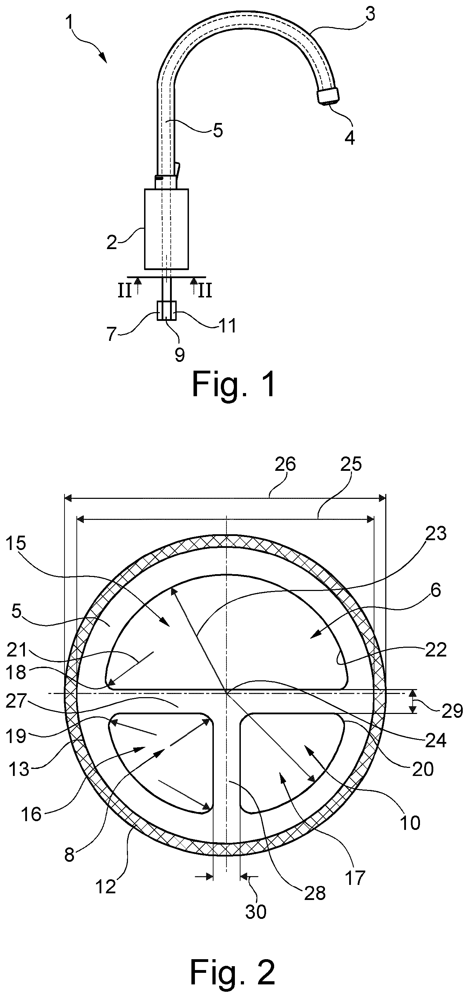

Die Fig. 1 zeigt eine Sanitärarmatur 1 in einer Seitenansicht. Die Sanitärarmatur 1 weist ein Armaturengehäuse 2 auf, das einen drehbar gelagerten Auslauf 3 mit einer Auslauföffnung 4 umfasst. Das Armaturengehäuse 2 ist an einem hier nicht gezeigten Träger befestigbar. Durch die Sanitärarmatur 1 verläuft ein Schlauch 5 aus Silikon, dessen in der Fig. 2 gezeigtes erstes Lumen 6 eine erste Flüssigkeitsquelle 7 mit der Auslauföffnung 4, zweites Lumen 8 eine zweite Flüssigkeitsquelle 9 mit der Auslauföffnung 4 und drittes Lumen 10 eine dritte Flüssigkeitsquelle 11 mit der Auslauföffnung 4 verbinden.

Die Fig. 2 zeigt den Schlauch 5 in einer Schnittdarstellung entlang der in der Fig. 1 gezeigten Schnittlinie II-II. Das erste Lumen 6 ist halbkreisförmig ausgebildet. Das zweite Lumen 8 und das dritte Lumen 10 sind viertelkreisförmig ausgebildet. Die Lumen 6, 8, 10 umfassen jeweils eine in Richtung einer Außenfläche 13 des Schlauchs 5 orientierte Innenwand 22 mit einem Lumenradius 23 um ein Zentrum 24 des Schlauchs 5. Ein erster Querschnitt 15 des ersten Lumens 6 umfasst erste Ecken 18, ein zweiter Querschnitt 16 des zweiten Lumens 8 zweite Ecken 19 und ein dritter Querschnitt 17 des dritten Lumens 10 dritte Ecken 20, die jeweils einen Radius 21 aufweisen.

Der Schlauch 5 weist an seiner Außenfläche 13 eine Ummantelung 12 auf. Ohne die Ummantelung 12 weist der Schlauch 5 einen ersten Außendurchmesser 25 und mit der Ummantelung 12 einen zweiten Außendurchmesser 26 auf. Das erste Lumen 6 ist von dem zweiten Lumen 8 und drittem Lumen 10 durch eine erste Trennwand 27 getrennt. Das zweite Lumen 8 und das dritte Lumen 10 sind durch eine zweite Trennwand 28 voneinander getrennt. Die erste Trennwand 27 weist eine erste Dicke 29 und die zweite Trennwand 28 eine zweite Dicke 30 auf.

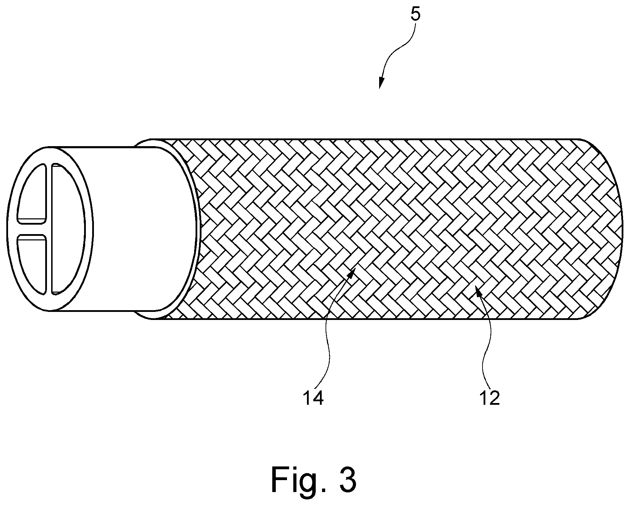

Die Fig. 3 zeigt den Schlauch 5 in einer perspektivischen Darstellung. Zu erkennen ist hier insbesondere, dass die Ummantelung 12 nach Art eines Geflechts 14 ausgebildet ist.

Durch die vorliegende Erfindung sind die Flüssigkeiten mit geringerem Platzbedarf zu der Auslauföffnung 4 leitbar.

### Bezugszeichenliste

- 1: Sanitärarmatur
- 2: Armaturengehäuse
- 3: Auslauf
- 4: Auslauföffnung
- 5: Schlauch
- 6: erstes Lumen
- 7: erste Flüssigkeitsquelle
- 8: zweites Lumen
- 9: zweite Flüssigkeitsquelle
- 10: drittes Lumen
- 11: dritte Flüssigkeitsquelle
- 12: Ummantelung
- 13: Außenfläche
- 14: Geflecht
- 15: erster Querschnitt
- 16: zweiter Querschnitt
- 17: dritter Querschnitt
- 18: erste Ecke
- 19: zweite Ecke
- 20: dritte Ecke
- 21: Radius
- 22: Innenwand
- 23: Lumenradius
- 24: Zentrum
- 25: erster Außendurchmesser
- 26: zweiter Außendurchmesser
- 27: erste Trennwand
- 28: zweite Trennwand
- 29: erste Dicke
- 30: zweite Dicke

## Patentansprüche

1. Sanitärarmatur (1), zumindest aufweisend:
- ein Armaturengehäuse (2) mit einem Auslauf (3) und einer Auslauföffnung (4); und
- einen Schlauch (5) aus Silikon mit zumindest einem ersten Lumen (6) zum Führen einer ersten Flüssigkeit von einer ersten Flüssigkeitsquelle (7) zu der Auslauföffnung (4), einem zweiten Lumen (8) zum Führen einer zweiten Flüssigkeit von einer zweiten Flüssigkeitsquelle (9) zu der Auslauföffnung (4) und einem dritten Lumen (10) zum Führen einer dritten Flüssigkeit von einer dritten Flüssigkeitsquelle (11) zu der Auslauföffnung (4), wobei der Schlauch (5) zumindest teilweise eine Ummantelung (12) aufweist, **dadurch gekennzeichnet, dass** ein erster Querschnitt (15) des ersten Lumens (6) halbkreisförmig ausgebildet ist und dass ein zweiter Querschnitt (16) des zweiten Lumens (8) und ein dritter Querschnitt (17) des dritten Lumens (10) viertelkreisförmig ausgebildet sind.

2. Sanitärarmatur (1) nach Patentanspruch 1, wobei das Silikon eine Härte von 70 bis 85 Shore A aufweist.

3. Sanitärarmatur (1) nach einem der vorhergehenden Patentansprüche, wobei die Ummantelung (12) an einer Außenfläche (13) des Schlauchs (5) ausgebildet ist.

4. Sanitärarmatur (1) nach einem der vorhergehenden Patentansprüche, wobei auf den Schlauch (5) wirkende Zugkräfte zumindest teilweise durch die Ummantelung (12) aufnehmbar sind.

5. Sanitärarmatur (1) nach einem der vorhergehenden Patentansprüche, wobei es sich bei der Ummantelung (12) um ein Geflecht (14) aus Draht oder zumindest einem Filament handelt.

6. Sanitärarmatur (1) nach Patentanspruch 5, wobei der Draht Edelstahl umfasst.

7. Sanitärarmatur (1) nach Patentanspruch 5 oder 6, wobei das zumindest eine Filament Polyethylenterephthalat (PET) umfasst.

8. Sanitärarmatur (1) nach einem der vorhergehenden Patentansprüche, wobei erste Ecken (18) eines ersten Querschnitts (15) des ersten Lumens (6), zweite Ecken (19) eines zweiten Querschnitts (16) des zweiten Lumens (8) oder dritte Ecken (20) eines dritten Querschnitts (17) des dritten Lumens (10) einen Radius (21) von 0,4 mm bis 0,6 mm aufweisen.

## Claims

1. A sanitary fitting (1), having at least:
- a fitting housing (2) with an outlet (3) and an outlet opening (4); and
- a hose (5) made of silicone with at least one first lumen (6) for routing a first liquid from a first liquid source (7) to the outlet opening (4), a second lumen (8) for routing a second liquid from a second liquid source (9) to the outlet opening (4), and a third lumen (10) for routing a third liquid from a third liquid source (11) to the outlet opening (4), wherein the hose (5) has, at least in part, a jacket (12), **characterized in that** a first cross-section (15) of the first lumen (6) is semicircular in shape, and **in that** a second cross-section (16) of the second lumen (8) and a third cross-section (17) of the third lumen (10) are quarter-circular in shape.

2. The sanitary fitting (1) according to claim 1, wherein the silicone has a hardness of 70 to 85 Shore A.

3. The sanitary fitting (1) according to any one of the preceding claims, wherein the jacket (12) is formed on an outer surface (13) of the hose (5).

4. The sanitary fitting (1) according to any one of the preceding claims, wherein tensile forces acting on the hose (5) can be at least partially absorbed by the jacket (12).

5. The sanitary fitting (1) according to any one of the preceding claims, wherein the jacket (12) is a mesh (14) made of wire or at least one filament.

6. The sanitary fitting (1) according to claim 5, wherein the wire comprises stainless steel.

7. The sanitary fitting (1) according to claim 5 or 6, wherein the at least one filament comprises polyethylene terephthalate (PET).

8. The sanitary fitting (1) according to any one of the preceding claims, wherein first corners (18) of a first cross-section (15) of the first lumen (6), second corners (19) of a second cross-section (16) of the second lumen (8), or third corners (20) of a third cross-section (17) of the third lumen (10) have a radius (21) of 0.4 mm to 0.6 mm.

## Revendications

1. Robinetterie sanitaire (1), comportant au moins :
- un corps (2) de robinetterie, pourvu d'un écoulement (3) et d'un orifice d'écoulement (4) ; et
- un tuyau flexible (5) en silicone, pourvu d'au moins un premier lumen (6), pour guider un premier liquide d'une première source de liquide (7) vers l'orifice d'écoulement (4), d'un deuxième lumen (8), pour guider un deuxième liquide d'une deuxième source de liquide (9) vers l'orifice d'écoulement (4) et d'un troisième lumen (10), pour guider un troisième liquide d'une troisième source de liquide (11) vers l'orifice d'écoulement (4), le tuyau flexible (5) comportant au moins partiellement une gaine (12), **caractérisé en ce qu'**une première section transversale (15) du premier lumen (6) est conçue en forme de demi-cercle et **en ce qu'**une deuxième section transversale (16) du deuxième lumen (8) et une troisième section transversale (17) du troisième lumen (10) sont conçues en forme de quarts de cercle.

2. Robinetterie sanitaire (1) selon la revendication 1 du brevet, le silicone faisant preuve du dureté de 70 à 85 Shore A.

3. Robinetterie sanitaire (1) selon l'une quelconque des revendications précédentes du brevet, la gaine (12) étant conçue sur une surface extérieure (13) du tuyau flexible (5).

4. Robinetterie sanitaire (1) selon l'une quelconque des revendications précédentes du brevet, des forces de traction agissant sur le tuyau flexible (5) pouvant être absorbées au moins partiellement par la gaine (12).

5. Robinetterie sanitaire (1) selon l'une quelconque des revendications précédentes du brevet, la gaine (12) étant un maillage (14) de fil métallique ou d'au moins un filament.

6. Robinetterie sanitaire (1) selon la revendication 5 du brevet, le fil métallique comprenant de l'acier inoxydable.

7. Robinetterie sanitaire (1) selon la revendication 5 ou 6 du brevet, l'au moins un filament comprenant du polyéthylène téréphtalate (PET).

8. Robinetterie sanitaire (1) selon l'une quelconque des revendications précédentes du brevet, des premiers angles (18) d'une première section transversale (15) du premier lumen (6), des deuxièmes angles (19) d'une deuxième section transversale (16) du deuxième lumen (8) ou des troisièmes angles (20) d'une troisième section transversale (17) du troisième lumen (10) présentant un rayon (21) de 0,4 mm à 0,6 mm.
